# EUROPÄISCHE PATENTSCHRIFT

(11) **EP 3 499 203 B1**
(45) Veröffentlichungstag und Bekanntmachung des Hinweises auf die Patenterteilung: **17.06.2020**
(21) Anmeldenummer: 18208837.7
(22) Anmeldetag: 28.11.2018
(51) Int. Cl.: G01L 5/24, B25B 23/142

(54) **VERFAHREN, VORRICHTUNG UND COMPUTERPROGRAMMPRODUKT ZUR PROZESSFÄHIGKEITSUNTERSUCHUNG EINER SCHRAUBVERBINDUNG**
METHOD, DEVICE AND COMPUTER PROGRAM PRODUCT FOR PROCESS FEASIBILITY EXAMINATION OF A SCREW CONNECTION
PROCÉDÉ, DISPOSITIF ET PRODUIT DE PROGRAMME INFORMATIQUE DESTINÉS À L'ANALYSE DE CAPACITÉ DU PROCESSUS D'UN RACCORDEMENT À VIS

(30) Priorität: 30.11.2017 EP 17204547
(43) Veröffentlichungstag der Anmeldung: 19.06.2019
(73) Patentinhaber: Kistler Holding AG, 8408 Winterthur (CH)
(72) Erfinder: Schatz, Volker, 42897 Remscheid (DE)

(56) Entgegenhaltungen:
- DE-A1-102007 055 028
- US-A1- 2008 209 707

## Beschreibung

### Technisches Gebiet

Die Erfindung betrifft ein Verfahren, eine Vorrichtung und ein Computerprogrammprodukt zur Prozessfähigkeitsuntersuchung einer Schraubverbindung nach dem Oberbegriff des unabhängigen Anspruchs.

### Stand der Technik

Die Richtlinie VDI/VDE 2645 Blatt 3 Entwurf vom Juli 2016 bezieht sich auf die Prozessfähigkeitsuntersuchung (PFU) einer Schraubverbindung. Die Richtlinie definiert eine Schraubverbindung als "lösbare Verbindung mit Gewinde, die zwei oder mehrere Teile so zusammenfügen soll, dass sie sich unter allen vorkommenden Betriebskräften wie ein Teil verhalten". Dabei werden die Teile mit einer Vorspannkraft F_{V} miteinander verbunden. Es ist allgemeiner Wunsch, eine Schraubverbindung mit möglichst geringem Gewicht, tiefen Materialkosten und maximaler Vorspannkraft F_{V} zu montieren.

Nun lässt sich die Vorspannkraft F_{V} bei der Montage der Schraubverbindung nicht direkt messen. Als Hilfsgrössen bei der Montage der Schraubverbindung werden Drehmoment M und Drehwinkel α verwendet. Üblicherweise weist die Schraubverbindung eine Schraube mit Gewinde und zwei durch sie zusammengehaltene Teile auf. Die Schraube selber besteht aus Schaft und Kopf, wobei sich das Gewinde bereichsweise über den Schaft erstreckt. Bei der Montage der Schraubverbindung wird ein Drehmoment M aufgebracht, was als Anziehen bezeichnet wird. Das Drehmoment M ist das Produkt einer Kraft, die die Schraube dreht, und einem senkrechten Abstand zwischen einer Kraftlinie und einer Drehachse der Schraube. Der Drehwinkel α ist der Winkel, um den sich die Schraube um die Drehachse dreht.

Die Schraube wird beim Anziehen gelängt. Bei elastischer Längung der Schraube, ist die erzeugte Vorspannkraft F_{V} proportional zum aufgebrachten Drehmoment M. Bei Erreichen der Streckgrenze der Schaube führt ein weiteres Anziehen der Schraube zu einer überelastischen Längung der Schraube. Die überelastische Längung der Schraube ist nicht mehr rückgängig zu machen. Eine überelastisch gelängte Schraube verliert ihre Wiederverwendbarkeit. Als Solldrehmoment M_{SOLL} wird dasjenige Drehmoment M bezeichnet, bei dem eine maximale Vorspannkraft F_{V} erzeugt wird, ohne die Schraube überelastisch zu längen. Das Anziehen erfolgt mit einem Schraubwerkzeug. Dabei wird zwischen einem handbetätigten Schraubwerkzeug und einem motorisch getriebenen Schraubwerkzeug unterschieden. Das Schraubwerkzeug kann ein Schraubenschlüssel, Drehmomentschlüssel, Schraubendreher, Schlagschrauber, Impulsschrauber, usw. sein.

Ziel der PFU ist die Bewertung und Dokumentation der Qualitätsfähigkeit bei der Montage der Schraubverbindung unter Serienbedingungen. Mit Serienbedingungen werden definierte Bedingungen der Montage der Schraubverbindung bei der Serienfertigung von Industriegütern bezeichnet. Im Unterschied zu einer Maschinenfähigkeitsuntersuchung berücksichtigt die PFU auch Einflusskategorien Mensch, Material, Methode und Maschine. So hat die Methode einen wesentlichen Einfluss auf die Qualität der Schraubverbindung, also beispielsweise ob die Schraubverbindung von Hand oder von einem motorisch getriebenen Schraubwerkzeug montiert worden ist. Von Hand wird eine Schraubverbindung mit langsamerer Drehgeschwindigkeit und anderer Kraft angezogen, als mit einem motorisch getriebenen Schraubwerkzeug wie einem Impulsschrauber, wo während des Anziehens eine schlagende Energie intermittierend zu- und abgeschaltet wird.

Für die PFU erfolgt die Montage der Schraubverbindung massgeblich durch drehmomentgesteuertes Anziehen oder durch drehwinkelgesteuertes Anziehen. Beim drehmomentgesteuerten Anziehen wird primär das Drehmoment M als Steuergrösse gemessen. Zum Messen des Drehmoments M weist das Schraubwerkzeug einen Drehmomentmesser oder eine Abschaltmechanik auf.

Das drehmomentgesteuerte Anziehen ist einfach durchzuführen und der dafür benötigte Drehmomentmesser ist kostengünstig. Nachteilig am drehmomentgesteuerten Anziehen ist die schwankende Reibung der Schraubverbindung. Auch wenn das Drehmoment M genau gemessen wird, streut die resultierende Vorspannkraft F_{V} deshalb trotzdem stark. Daher wird die Schraubverbindung oft überdimensioniert, nur um eine notwendige Vorspannkraft F_{V} sicher zu erzeugen.

Beim drehwinkelgesteuerten Anziehen wird eine Paarung aus Drehmoment M und Drehwinkel α als Steuergrössen gemessen. Die Schraube wird zunächst bis zu einem vordefinierten Schwellenmoment M_{S} montiert. Anschließend wird die Schraube um einen bekannten Sollanzugswinkel α_{SOLL} weitergedreht. Der Drehwinkel α entspricht dabei einer indirekten Messung der Längung der Schraube.

Zum Messen des Drehwinkels α weist das Schraubwerkzeug einen Winkelgeber auf. Die Schrift DE102007055028A1 offenbart ein Schraubwerkzeug in der Ausführungsform eines Drehmomentschlüssels mit einem Winkelgeber in der Ausführungsform einer gyroskopischen Messeinheit.

Das drehwinkelgesteuerte Anziehen ist deshalb genauer als das drehmomentgesteuerte Anziehen, es ist jedoch auch aufwändiger in der Durchführung und teurer, da zusätzlich ein Winkelgeber benötigt wird. Das Drehwinkelverfahren kann im elastischen Dehnbereich der Schraube angewendet werden oder im überelastischen Bereich, d.h. in den Bereich in dem die Schraube bleibend verformt bleibt.

Die Schrift US2008209707A1 bezieht sich auf ein Verfahren zur Bestimmung der Vorspannkraft einer Schraubverbindung. Zu Beginn des Verfahrens wird die Schraubverbindung vorgespannt. Der Vorspanndrehwinkel und das Vorspanndrehmoment werden gemessen. Das Vorspanndrehmoment ist grösser Null und kleiner als ein geschätztes maximales Drehmoment. Daraufhin wird die Schraubverbindung gelöst. Der Lösedrehwinkel und das Lösedrehmoment werden gemessen. Das Lösedrehmoment ist frei einstellbar und grösser Null. Nun wird die Schraubverbindung erneut angezogen. Der Anziehdrehwinkel und das Anziehdrehmoment werden gemessen. Das Anziehdrehmoment ist kleiner oder gleich dem Vorspanndrehmoment und liegt auf einer Drehwinkelgeraden, die vom Lösedrehwinkel zum erreichten Drehwinkel reicht. Aus den gemessenenen Drehwinkeln und Drehmomenten wird dann ein spezifisches Drehmoment berechnet.

Eine erste Aufgabe der vorliegenden Erfindung ist es, ein Verfahren zur PFU einer Schraubverbindung aufzuzeigen, welches Verfahren einfach durchführbar ist und ein genaues Ergebnis liefert. Eine weitere Aufgabe der Erfindung besteht darin, eine Verwendung einer Vorrichtung zur Durchführung des Verfahrens anzugeben, welche Vorrichtung kostengünstig und einfach bedienbar ist. Und es ist Aufgabe der Erfindung ein Computerprogrammprodukt zur Durchführung des Verfahrens bereitzustellen, welches Computerprogrammprodukt in einen Datenverarbeitungsprozessor der Vorrichtung ladbar ist und eine einfache Durchführung des Verfahrens ermöglicht und ein genaues Ergebnis liefert.

### Darstellung der Erfindung

Zumindest eine dieser Aufgaben wird durch die Merkmale der unabhängigen Ansprüche gelöst.

Die Erfindung betrifft ein Verfahren zur Prozessfähigkeitsuntersuchung einer Schraubverbindung nach Anspruch 1.

Die Erfindung betrifft auch eine Verwendung einer Vorrichtung zur Durchführung des Verfahrens.

Und die Erfindung betrifft ein Computerprogrammprodukt zur Durchführung des Verfahrens.

### Kurze Beschreibung der Zeichnungen

Im Folgenden wird die Erfindung beispielhaft unter Beizug der Figuren näher erklärt. Es zeigen
- Fig. 1: eine schematische Ansicht einer Vorrichtung zur PFU einer Schraubverbindung nach Fig. 2;
- Fig. 2: einen Querschnitt durch eine Schraubverbindung;
- Fig. 3: eine Darstellung der Schritte des Verfahrens zur PFU der Schraubverbindung nach Fig. 2;
- Fig. 4: Drehmoment/Drehwinkel-Verlauf beim Anziehen der Schraubverbindung nach Fig. 2 mit einem Anzugswinkel unter Serienbedingungen;
- Fig. 5: Drehmoment/Drehwinkel-Verlauf beim Lösen der nach Fig. 4 angezogenen Schraubverbindung mit einer Lösewinkeldifferenz; und
- Fig. 6: Drehmoment/Drehwinkel-Verlauf beim Anziehen der nach Fig. 5 gelösten Schraubverbindung mit einem Schwellenmoment.

### Wege zur Ausführung der Erfindung

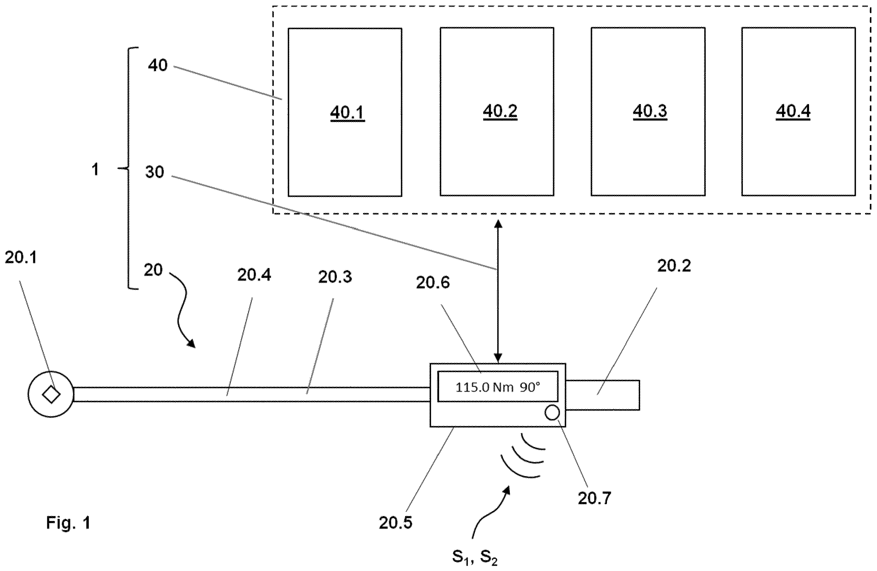

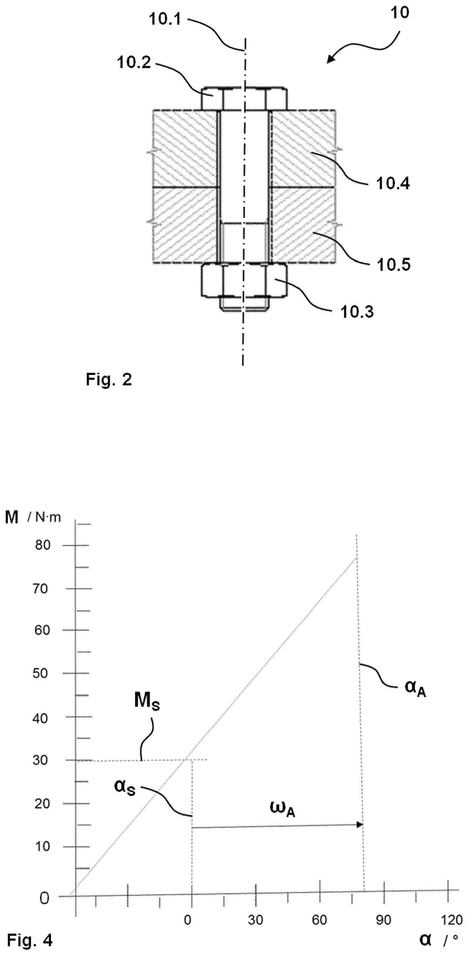

Fig. 1 zeigt eine schematische Ansicht einer Vorrichtung 1 zur PFU einer Schraubverbindung 10 nach Fig. 2. Die Vorrichtung 1 weist ein Schraubwerkzeug 20 in der Ausführungsform eines Drehmomentschlüssels mit einem Aufnahmekopf 20.1 zum Ansetzen an der Schraubverbindung 10. Am Aufnahmekopf 20.1 befindet sich vorzugsweise ein Vierkantdorn zur Aufnahme einer Schraubnuss. Der Drehmomentschlüssel ist handgeführt und weist dafür einen Handgriff 20.2 auf. Aufnahmekopf 20.1 und Handgriff 20.2 sind über ein Rohrteil 20.3 mechanisch miteinander verbunden. Eine am Handgriff 20.2 eingebrachte Kraft wirkt am Aufnahmekopf 20.1 als Drehmoment M auf die Schraubverbindung 10. Die Vorrichtung 1 wird von einem Benutzer bedient.

Das Schraubwerkzeug 20 weist einen Drehmomentmesser 20.4 auf. Vorzugsweise ist der Drehmomentmesser 20.4 ein im Rohrteil 20.3 angeordneter Dehnungsmessstreifen. Die am Handgriff 20.2 eingebrachte Kraft verformt das Rohrteil 20.3, welche Verformung vom Dehnungsmessstreifen als elektrische Widerstandsänderung gemessen wird. Die Widerstandsänderung ist proportional zum am Aufnahmekopf 20.1 wirkenden Drehmoment M. Vorzugsweise wird das Drehmoment M mit einer Messunsicherheit von ±4% oder besser nach DIN ISO 6789 gemessen. Für gemessene Widerstandsänderungen erzeugt der Drehmomentmesser 20.4 Drehmomentsignale, diese Drehmomentsignale sind an einem Ausgang des Drehmomentmessers 20.4 abrufbar.

Das Schraubwerkzeug 20 weist einen Winkelgeber 20.5 in der Ausführungsform einer gyroskopischen Messeinheit auf. Vorzugsweise ist die gyroskopische Messeinheit ein Mikroelektromechanisches System (MEMS) mit einer schwingfähigen Struktur, welche Schwingung bei einer Drehung um eine Drehachse 10.1 der Schraubverbindung 10 durch die Corioliskraft verändert wird, welche Schwingungsänderung wiederum als Kapazitätsänderung gemessen wird. Die Kapazitätsänderung ist proportional zum Drehwinkel α der Drehung um die Drehachse 10.1. Vorzugsweise wird der Drehwinkel α mit einer Messunsicherheit von 1° oder besser gemessen. Für gemessene Kapazitätsänderungen erzeugt der Winkelgeber 20.5 Drehwinkelsignale, diese Drehwinkelsignale sind an einem Ausgang des Winkelgebers 20.5 abrufbar.

Die Vorrichtung 1 weist eine Auswerteinheit 40 und eine Datenübertragung 30 zwischen dem Schraubwerkzeug 20 und der Auswerteeinheit 40 auf. Die Datenübertragung 30 ist bidirektional und kann kabelgebunden oder per Funk erfolgen, dabei können bekannte und bewährte Kommunikationsstandards wie Recommended Standard 232 (RS-232), Universal Serial Bus (USB), Internetprotokoll (IP), usw. zum Einsatz kommen. Drehmomentsignale und Drehwinkelsignale werden vom Schraubwerkzeug 20 mittels der Datenübertragung 30 an die Auswerteeinheit 40 übertragen.

Die Auswerteeinheit 40 weist eine Messeinheit 40.1, einen Datenverarbeitungsprozessor 40.2, einen Datenspeicher 40.3 und eine Eingabe- und Ausgabeeinheit 40.4 auf. Die Messeinheit 40.1 empfängt übertragene Drehmomentsignale und übertragene Drehwinkelsignale und digitalisiert empfangene Drehmomentsignale und empfangene Drehwinkelsignale.

Das Schraubwerkzeug 20 weist eine Anzeigeeinheit 20.6 und eine Signaleinheit 20.7 auf. Digitalisierte Drehmomentsignale und digitalisierte Drehwinkelsignale werden von der Messeinheit 40.1 mittels der Datenübertragung 30 an das Schraubwerkzeug 20 übertragen. Das Schraubwerkzeug 20 empfängt übertragene digitalisierte Drehmomentsignale und übertragene digitalisierte Drehwinkelsignale und gibt sie auf der Anzeigeeinheit 20.6 aus. Dies ist in Fig. 1 beispielhaft dargestellt, mit "115.0Nm" wird ein Drehmomentsignal ausgegeben, mit "90°" wird ein Drehwinkelsignal ausgegeben.

Bei Kenntnis der vorliegenden Erfindung kann der Fachmann auch andere hier nicht figürlich dargestellte Ausführungsformen eines handbetätigten Schraubwerkzeuges wie Schraubenschlüssel, Schraubendreher, usw. sowie motorisch getriebene Schraubwerkzeuge verwenden. Auch kann die Auswerteeinheit im Schraubwerkzeug integriert sein, so kann die Messeinheit im Schraubwerkzeug integriert sein und empfangene Drehmomentsignale und empfangene Drehwinkelsignale im Schraubwerkzeug digitalisieren.

Fig. 2 zeigt einen Querschnitt durch eine Schraubverbindung 10 mit einer Schraube 10.2 und einer Mutter 10.3. die Schraubverbindung 10 fügt ein erstes Teil 10.4 und ein zweites Teil 10.5 zusammen. Die Schraube 10.2 ist ein Bolzen mit Aussengewinde, die Mutter 10.3 ist das zur Schraube 10.2 passende, mit einem Innengewinde versehene Gegenstück. Das Aussengewinde und das Innengewinde treten bei der Schraubverbindung 10 in vollflächigen Kontakt miteinander. Die Schraubverbindung 10 ist üblicherweise kraft- und formschlüssig. Die Schraubverbindung 10 weist eine Drehachse 10.1 auf. Durch Drehung der Schraube 10.2 in einer Drehrichtung um die Drehachse 10.1 wird die Schraube 10.2 auf der Mutter 10.3 angezogen oder durch Drehung der Schraube 10.2 entgegen der Drehrichtung um die Drehachse 10.1 von der Mutter 10.3 gelöst. Gemäss Definition der vorliegenden Erfindung werden Drehwinkel α beim Anziehen der Schraubverbindung 10 positiv (+) bezeichnet, während Drehwinkel α beim Lösen der Schraubverbindung 10 negativ (-) bezeichnet werden. Die Schraubverbindung 10 kann aus hartem Material wie Metall (Stahl, Messing, Aluminium, usw.) oder weichem Material wie Holz, Kunststoff (Polyamid, Polycarbonat, usw.), usw. bestehen.

Der Drehwinkel α wird vorzugsweise nach Überschreiten eines Schwellenmoments M_{S} gemessen. Ein dem Schwellenmoment M_{S} entsprechender Schwellenwinkel α_{S} beträgt per Definition 0°. Üblicherweise liegt das Schwellenmoment M_{S} bei 20% bis 80% des Sollanzugsmoments M_{SOLL}. Beim Sollanzugsmoment M_{SOLL} wird eine maximale Vorspannkraft F_{SOLL} erzeugt. Ein dem Sollanzugsmoment M_{SOLL} entsprechender Drehwinkel α wird als Sollanzugswinkel α_{SOLL} bezeichnet. Bei harten Materialien (harter Schraubenfall) liegt das Schwellenmoment M_{S} näher bei 20% des Sollanzugsmoments M_{SOLL}, bei weichen Materialien (weicher Schraubenfall) liegt das das Schwellenmoment M_{S} näher bei 80% des Sollanzugsmoments M_{SOLL}. Für die Schraubverbindung 10 nach Fig. 2 ist das Schwellenmoment M_{S} = 30Nm vordefiniert und Sollanzugsmoment M_{SOLL} und Sollanzugswinkel α_{SOLL} sind bekannt und betragen Sollanzugsmoment M_{SOLL} = 90Nm und Sollanzugswinkel α_{SOLL} = +90°. Ein Triplett aus Schwellenmoment M_{S}, Sollanzugsmoment M_{SOLL} und Sollanzugswinkel α_{SOLL} wird für jede auf Prozessfähigkeit zu untersuchende Schraubverbindung 10 im Datenspeicher 40.3 gespeichert.

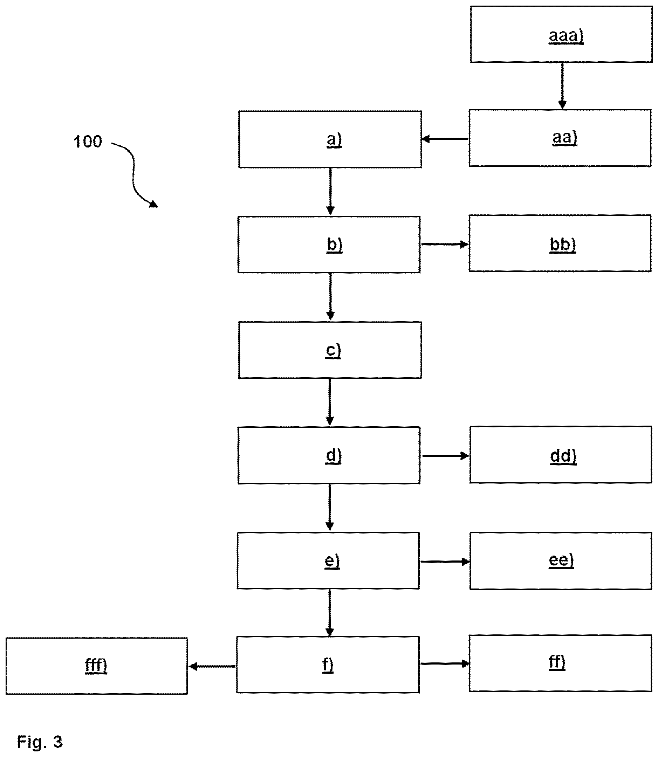

Im Datenspeicher 40.3 ist ein Computerprogrammprodukt 100 speicherbar und aus dem Datenspeicher 40.3 in den Datenverarbeitungsprozessor 40.2 ladbar und zur Durchführung des Verfahrens zur PFU der Schraubverbindung 10 im Datenverarbeitungsprozessor 40.2 ausführbar. Fig. 3 ist eine Darstellung der dabei vom Computerprogrammprodukt 100 ausgeführten Schritte a) bis f). Dabei sind die Schritte aaa), aa), bb), dd), ee), ff) und fff) optional.

Fig. 4 bis 6 zeigen drei Drehmoment/Drehwinkel-Verläufe. Die Ordinate gibt das Drehmoment M in der Einheit Nm wieder, und die Abszisse gibt den Drehwinkel α in der Einheit ° wieder.

Fig. 4 zeigt den Drehmoment/Drehwinkel-Verlauf der unter Serienbedingungen angezogenen Schraubverbindung 10 nach Fig. 2. Nach Überschreiten des Schwellenmoments M_{S} = 30Nm ist die Schraubverbindung 10 mit einem Anzugswinkel α_{A} = +80° angezogen worden. Bezogen auf den Schwellenwinkel α_{S} = 0° ist die Schraubverbindung 10 mit einer Anzugswinkeldifferenz ω_{A} = +80° angezogen worden.

Ziel der PFU ist die Überprüfung des Anzugswinkels α_{A} der unter Serienbedingungen angezogenen Schraubverbindung 10. Der Anzugswinkel α_{A} ist nicht bekannt. Mit der PFU wird überprüft, ob und inwieweit der Anzugswinkel α_{A} vom Sollanzugswinkel α_{SOLL} abweicht. Das Ergebnis der PFU besteht somit im Ermitteln vom Anzugswinkel α_{A} und im Ermitteln einer Winkeldifferenz ω als Nachweis der Prozessfähigkeit. Die Winkeldifferenz ω gibt an, inwieweit Anzugswinkel α_{A} und Sollanzugswinkel α_{SOLL} voneinander abweichen.

Vorzugsweise vor der Ausführung von einem Schritt a) wird in einem Schritt aaa) die unter Serienbedingungen angezogene Schraubverbindung 10 identifiziert, und der identifizierten Schraubverbindung 10 werden ein Triplett aus vordefiniertem Schwellenmoment M_{S},, bekanntem Sollanzugsmoment M_{SOLL} und bekanntem Sollanzugswinkel α_{SOLL} zugeordnet. Für die Schraubverbindung 10 nach Fig. 2 beträgt das Triplett (M_{S}; M_{SOLL}; α_{SOLL}) = (30Nm; 90Nm ; +90°) .

Vorzugsweise vor der Ausführung von Schritt a) und nach der Ausführung von Schritt aaa) ermittelt das Computerprogrammprodukt 100 in einem Schritt aa) für die identifizierte Schraubverbindung 10 eine vordefinierte Lösewinkeldifferenz ω_{L}. Die Lösewinkeldifferenz ω_{L} ist grösser als die Anzugswinkeldifferenz ω_{A}. Die Lösewinkeldifferenz ω_{L} ist gleich dem negativen Sollanzugswinkel α_{SOLL} plus einem vordefinierten Lösewinkelzuschlag α_{Z}. Der Lösewinkelzuschlag α_{Z} beträgt vorzugsweise 0° bis -30°, oder vorzugsweise 0° bis -15°, oder vorzugsweise 0° bis -5°. Für die Schraubverbindung 10 nach Fig. 2 ermittelt das Computerprogrammprodukt 100 für einen Sollanzugswinkel α_{SOLL} = 90° und einen Lösewinkelzuschlag α_{Z} = -5° eine Lösewinkeldifferenz ω_{L} = -95°. Die Lösewinkeldifferenz ω_{L} ist vorzugsweise so klein, dass ein Haltewinkel α_{H}, nicht unterschritten wird, welchem Haltewinkel α_{H} eine Haltekraft F_{H} entspricht. Beim Haltewinkel α_{H} wird die Schraubverbindung 10 mit der Haltekraft F_{H} gehalten, welche Haltekraft F_{H} so gross ist, dass sich Schraube 10.2, Mutter 10.3 und die Teile 10.4, 10.5 ohne Einfluss einer äusseren Kraft wie der Gravitationskraft nicht voneinander lösen.

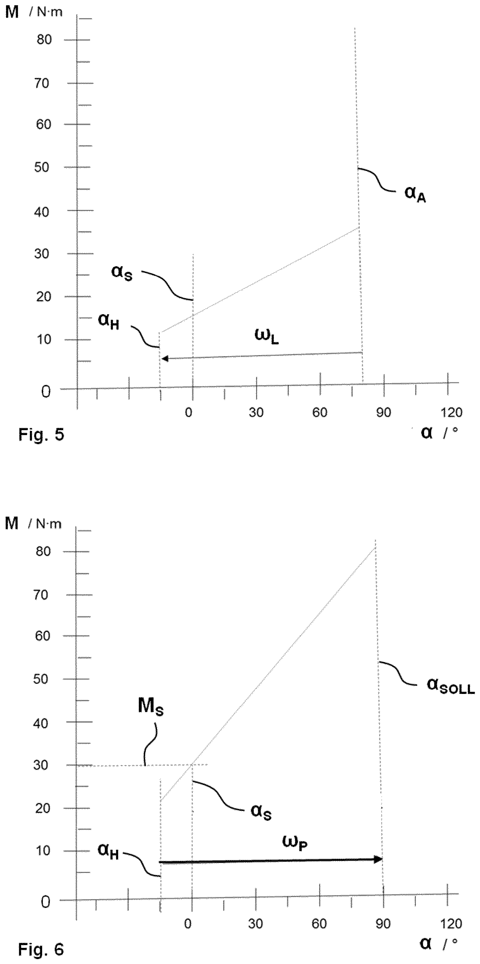

Wie in Fig. 5 dargestellt, wird im Schritt a) die Schraubverbindung 10 bis zum Erreichen der vordefinierten Lösewinkeldifferenz ω_{L} gelöst. Der Benutzer löst die unter Serienbedingungen angezogene Schraubverbindung 10 mit dem Schraubwerkzeug 20. Dabei misst der Winkelgeber 20.5 fortwährend den Drehwinkel α und erzeugt für gemessene Drehwinkel α Drehwinkelsignale. Mittels der Datenübertragung 30 werden erzeugte Drehwinkelsignale an die Messeinheit 40.1 übertragen und von der Messeinheit 40.1 digitalisiert. Digitalisierte Drehwinkelsignale werden vom Computerprogrammprodukt 100 eingelesen und aufaddiert und die Addition wird vom Computerprogrammprodukt 100 mit der zu erreichenden Lösewinkeldifferenz ω_{L} = -95° verglichen.

In einem Schritt b) wird die Lösewinkeldifferenz ω_{L} = -95° gemessen. Der Haltewinkel α_{H} = -15° ist erreicht. Sobald die Lösewinkeldifferenz ω_{L} gemessen wird, erzeugt das Computerprogrammprodukt 100 in einem Schritt bb) ein Lösestoppsignal S₁. Das erzeugte Lösestoppsignal S₁ wird mittels der Datenübertragung 30 an das Schraubwerkzeug 20 übertragen und das übertragene Lösestoppsignal S₁ wird von der Signaleinheit 20.7 ausgegeben. Die Signaleinheit 20.7 kann eine Leuchte, ein Lautsprecher, ein Vibrator, usw. sein. Somit nimmt der Benutzer das ausgegebene Lösestoppsignal S₁ wahr und beendet das Lösen der Schraubverbindung 10. In Fig. 1 ist das Lösestoppsignal S₁ schematisch als eine sich ausbreitende, optische oder akustische Welle dargestellt.

Nun wird in einem Schritt c) die Schraubverbindung 10 mit dem vordefinierten Schwellenmoment M_{S} angezogen. Schritt c) folgt auf Schritt b). Dabei zieht der Benutzer die gelöste Schraubverbindung 10 mit dem Schraubwerkzeug 20 an. Der Drehmomentmesser 20.4 misst fortwährend das Drehmoment M und erzeugt für gemessene Drehmomente M Drehmomentsignale. Und der Winkelgeber 20.5 misst fortwährend den Drehwinkel α und erzeugt für gemessene Drehwinkel α Drehwinkelsignale. Mittels der Datenübertragung 30 werden erzeugte Drehmomentsignale und erzeugte Drehwinkelsignale an die Messeinheit 40.1 übertragen und von der Messeinheit 40.1 digitalisiert. Digitalisierte Drehmomentsignale werden vom Computerprogrammprodukt 100 eingelesen und aufaddiert und die Addition mit dem gemäss Triplett (M_{S}; M_{SOLL}; α_{SOLL}) = (30Nm; 90Nm ; +90°) vordefinierten Schwellenmoment M_{S} = 30Nm verglichen. Auch die digitalisierten Drehwinkelsignale werden vom Computerprogrammprodukt 100 eingelesen und aufaddiert. Fig. 6 zeigt den Drehmoment/Drehwinkel-Verlauf der mit dem Schwellenmoment M_{S} angezogenen Schraubverbindung 10.

In einem Schritt d) wird bei Erreichen des vordefinierten Schwellenmoments M_{S} = 30Nm der Schwellenwinkel α_{S} gemessen. Schritt d) folgt auf Schritt c).

Nun wird in einem Schritt e) die Schraubverbindung 10 weiter angezogen. Dabei zieht er Benutzer mit dem Schraubwerkzeug 20 weiter an, bis der vordefinierte Sollanzugswinkel α_{SOLL} erreicht ist. Gemäss Triplett (M_{S}; M_{SOLL}; α_{SOLL}) = (30Nm; 90Nm ; +90°) beträgt der Sollanzugswinkel α_{SOLL} = +90°. Schritt e) folgt auf Schritt d). Dabei misst der Winkelgeber 20.5 fortwährend den Drehwinkel α und erzeugt für gemessene Drehwinkel α Drehwinkelsignale. Mittels der Datenübertragung 30 werden erzeugte Drehwinkelsignale an die Messeinheit 40.1 übertragen und von der Messeinheit 40.1 digitalisiert. Digitalisierte Drehwinkelsignale werden vom Computerprogrammprodukt 100 eingelesen und aufaddiert und die Addition wird vom Computerprogrammprodukt 100 mit dem hinterlegten Sollanzugswinkel α_{SOLL} = +90° verglichen.

Sobald der bekannte Sollanzugswinkel α_{SOLL} = +90° erreicht ist, wird in einem Schritt f) eine angezogene Prüfwinkeldifferenz ω_{P} = 105° gemessen. Die Prüfwinkeldifferenz ω_{P} = 105° ist eine Winkeldifferenz zwischen dem Haltewinkel α_{H} und dem Sollanzugswinkel α_{SOLL}.

Sobald der Sollanzugswinkel α_{SOLL} gemessen wird, erzeugt das Computerprogrammprodukt 100 im Schritt ee) ein Anzugstoppsignal S₂. Schritt ee) folgt auf Schritt e). Das erzeugte Anzugstoppsignal S₂ wird mittels der Datenübertragung an das Schraubwerkzeug 20 übertragen und das übertragene Anzugstoppsignal S₂ wird von der Signaleinheit 20.7 ausgegeben. Somit nimmt der Benutzer das ausgegebene Anzugstoppsignal S₂ wahr und beendet das Anziehen der Schraubverbindung 10. In Fig. 1 ist das Anzugstoppsignal S₂ schematisch als eine sich ausbreitende, optische oder akustische Welle dargestellt.

Nach der Ausführung von Schritt f) ermittelt das Computerprogrammprodukt 100 in einem Schritt ff) den Anzugswinkel α_{A}, mit welchem Anzugswinkel α_{A} die Schraubverbindung 10 unter Serienbedingungen angezogen worden ist. Der Anzugswinkel lautet α_{A} = α_{SOLL} - ω_{P} + ω_{L}. Nach Fig. 6 beträgt der Anzugswinkel α_{A} = 90° - 105° + 95° = 80°. Dem Benutzer wird der ermittelte Anzugswinkel α_{A} auf der Anzeigeeinheit 20.6 als Drehwinkelsignal "80°" ausgegeben.

Nach der Ausführung von Schritt f) ermittelt das Computerprogrammprodukt 100 in einem Schritt fff) die Winkeldifferenz ω als Nachweis der Prozessfähigkeit. Die Winkeldifferenz ω gibt an, inwieweit der Anzugswinkel α_{A}, mit welchem Anzugswinkel α_{A} die Schraubverbindung 10 unter Serienbedingungen angezogen worden ist, vom Sollanzugswinkel α_{SOLL} abweicht. Die Winkeldifferenz lautet ω = - ω_{P} + ω_{L}. Nach Fig. 6 beträgt die Winkeldifferenz ω = - 105° + 95° = 10°. Dem Benutzer wird die Winkeldifferenz ω auf der Anzeigeeinheit 20.6 als Drehwinkelsignal "10°" ausgegeben.

Das Verfahren zur PFU der Schraubverbindung 10 kann auch vollautomatisch durchgeführt werden. Dazu wird an Stelle des handbetätigten Schraubwerkzeuges 20 ein motorisch getriebenes Schraubwerkzeug 20 verwendet. Die Identifikation der unter Serienbedingungen angezogenen Schraubverbindung 10 erfolgt dann vorzugsweise durch Bilderkennung. Dazu weist die Vorrichtung 1 eine Fotokamera auf, welche Fotokamera die zu identifizierende Schraubverbindung 10 fotografiert und digitale Fotosignale der zu identifizierende Schraubverbindung 10 erzeugt. Die digitalen Fotosignale werden mittels der Datenübertragung 30 an die Auswerteinheit 40 übertragen und vom Computerprogrammprodukt 100 eingelesen. Im Datenspeicher 40.3 ist eine Bibliothek mit digitalen Bildern von Schraubverbindungen 10. Das Computerprogrammprodukt 100 vergleicht die eingelesenen digitalen Fotosignale mit digitalen Bildern der Bibliothek und identifiziert die zu identifizierende Schraubverbindung 10 durch Bilderkennung mit einem digitalen Bild der Bibliothek. Beispielsweise weist die Schraube 10.2 einen Schraubenkopf auf, auf welchem Schraubenkopf eine Bolzengüte der Schraube 10.2 angegeben ist. Eine typische Bolzengüte bei der Serienfertigung von Industriegütern wird als "8.8" angegeben, was sich in den digitalen Fotosignalen erkennen lässt. Zudem lassen sich Länge und Durchmesser der digitalen Fotosignale vermessen. Aus der erkannten Bolzengüte und der Vermassung folgt die Identifizierung. Der vom Computerprogrammprodukt 100 identifizierten Schraubverbindung 10 ordnet das Computerprogrammprodukt 100 ein Triplett zu. Und das Lösestoppsignal S₁ sowie das Anzugstoppsignal S₂ werden bei einem motorisch getriebenen Schraubwerkzeug 20 nicht auf einer Signaleinheit 20.7 ausgegeben, sondern sind Steuersignale für das motorisch getriebene Schraubwerkzeug 20. Mit dem Lösestoppsignal S₁ wird das Lösen der unter Serienbedingungen angezogenen Schraubverbindung 10 gestoppt, Anzugstoppsignal S₂. Wird das Anziehen der Schraubverbindung 10 gestoppt.

### Bezugszeichenliste

- 1: Vorrichtung
- 10: Schraubverbindung
- 10.1: Drehachse
- 10.2: Schraube
- 10.3: Mutter
- 10.4: erstes Teil
- 10.5: zweites Teil
- 20: Drehmomentschlüssel
- 20.1: Aufnahmekopf
- 20.2: Handgriff
- 20.3: Rohrteil
- 20.4: Drehmomentmesser
- 20.5: Winkelgeber
- 20.6: Anzeigeeinheit
- 20.7: Signaleinheit
- 30: Datenübermittlung
- 40: Auswertevorrichtung
- 40.1: Messeinheit
- 40.2: Datenverarbeitungsprozessor
- 40.3: Datenspeicher
- 40.4: Eingabe- und Ausgabeeinheit
- 100: Computerprogrammprodukt
- a) - f): Schritte
- M: Drehmoment
- M_{S}: Schwellenmoment
- M_{SOLL}: Sollanzugsmoment
- S₁: Lösestoppsignal
- S₂: Anzugstoppsignal
- α: Drehwinkel
- α_{A}: Anzugswinkel unter Serienbedingungen
- α_{H}: Haltewinkel
- α_{S}: Schwellwinkel
- α_{SOLL}: Sollanzugswinkel
- α_{Z}: Lösewinkelzuschlag
- ω: Winkeldifferenz zwischen Anzugswinkel und Sollanzugswinkel
- ω_{A}: Anzugswinkeldifferenz
- ω_{L}: Lösewinkeldifferenz
- ω_{P}: Prüfwinkeldifferenz

## Patentansprüche

1. Verfahren zur Prozessfähigkeitsuntersuchung einer Schraubverbindung (10), welche Schraubverbindung (10) unter Serienbedingungen mit einem Anzugswinkel (α_{A}) angezogen worden ist; **gekennzeichnet durch** die Schritte:
aaa) dass vor einer Ausführung vom Schritt a) die unter Serienbedingungen angezogene Schraubverbindung (10) identifiziert wird; und dass der identifizierten Schraubverbindung (10) ein bekanntes Sollanzugsmoment (M_{SOLL}) und ein bekannter Sollanzugswinkel (α_{SOLL}) zugeordnet wird;
aa) dass vor einer Ausführung vom Schritt a) und nach der Ausführung von Schritt aaa) für die identifizierte Schraubverbindung (10) eine vordefinierte Lösewinkeldifferenz (ω_{L}) ermittelt wird, welche Lösewinkeldifferenz (ω_{L}) gleich dem negativen Sollanzugswinkel (α_{SOLL}) plus einem vordefinierten Lösewinkelzuschlag (α_{Z}) ist;
a) Lösen der Schraubverbindung (10) bis zum Erreichen der vordefinierten Lösewinkeldifferenz (ω_{L}) ;
b) Messen der erreichten Lösewinkeldifferenz (ω_{L}) ; messen eines im Schritt a) erreichten Lösewinkels (α_{H}) ;
c) Anziehen der Schraubverbindung (10) mit einem vordefinierten Schwellenmoment (M_{S}) ;
d) Messen eines dem erreichten Schwellenmoment (M_{S}) entsprechenden Schwellenwinkels (α_{S}) ;
e) weiteres Anziehen der Schraubverbindung (10) bis zum Erreichen des bekannten Sollanzugswinkels (α_{SOLL}) ; und
f) Messen der beim Erreichen des Sollanzugswinkels (α_{SOLL}) angezogenen Prüfwinkeldifferenz (ω_{P}) , welche Prüfwinkeldifferenz (ω_{P}) eine Winkeldifferenz zwischen dem Haltewinkel (α_{H}) und dem Sollanzugswinkel (α_{SOLL}) ist.

2. Verfahren nach Anspruch 1, **dadurch gekennzeichnet, dass** nach der Ausführung von Schritt f) in einem Schritt ff) ein Anzugswinkel (α_{A}), mit welchem Anzugswinkel (α_{A}) die Schraubverbindung (10) unter Serienbedingungen angezogen worden ist, als (α_{A} = α_{SOLL} - ω_{P} + ω_{L}) ermittelt wird; und dass der ermittelte Anzugswinkel (α_{A}) ausgegeben wird.

3. Verfahren nach einem der Ansprüche 1 oder 2, **dadurch gekennzeichnet, dass** nach der Ausführung von Schritt f) in einem Schritt fff) eine Winkeldifferenz (ω), mit welcher Winkeldifferenz (ω) der Anzugswinkel (α_{A}) der unter Serienbedingungen angezogen Schraubenverbindung (10) vom Sollanzugswinkel (α_{SOLL}) abweicht, als (ω = - ω_{P} + ω_{L}) ermittelt wird; und dass die ermittelte Winkeldifferenz (ω) ausgegeben wird.

4. Verfahren nach einem der Ansprüche 1 bis 3, **dadurch gekennzeichnet, dass** nach der Ausführung vom Schritt b) in einem Schritt bb) für die gemessene Lösewinkeldifferenz (ω_{L}) ein Lösestoppsignal (S₁) erzeugt wird; dass das erzeugte Lösestoppsignal (S₁) ausgegeben wird; und dass für ein ausgegebenes Lösestoppsignal (S₁) das Lösen der Schraubverbindung (10) beendet wird.

5. Verfahren nach einem der Ansprüche 1 bis 4, **dadurch gekennzeichnet, dass** nach der Ausführung vom Schritt e) in einem Schritt ee) für den gemessenen Sollanzugswinkel (α_{SOLL}) ein Anzugstoppsignal (S₂) erzeugt wird; dass das erzeugte Anzugstoppsignal (S₂) ausgegeben wird; und dass für ein ausgegebenes Anzugstoppsignal (S₂) das weitere Anziehen der Schraubverbindung (10) beendet wird.

6. Verwendung einer Vorrichtung (1) zur Durchführung des Verfahrens nach Anspruch 2, welche Vorrichtung (1) ein Schraubwerkzeug (20) aufweist, mit welchem Schraubwerkzeug (20) die unter Serienbedingungen angezogene Schraubverbindung (10) lösbar ist; welches Schraubwerkzeug (20) einen Winkelgeber (20.5) aufweist, mit welchem Winkelgeber (20.5) die Lösewinkeldifferenz (ω_{L}) messbar ist; und welches Schraubwerkzeug (20) einen Drehmomentmesser (20.4) aufweist, mit welchem Drehmomentmesser (20.4) das Schwellenmoment (M_{S}) messbar ist; **dadurch gekennzeichnet, dass** die Vorrichtung (1) eine Anzeigeeinheit (20.6) aufweist, welche Anzeigeeinheit (20.6) den ermittelten Anziehwinkel (α_{A}) der unter Serienbedingungen angezogenen Schraubverbindung (10) ausgibt.

7. Verwendung der Vorrichtung (1) nach Anspruch 6, **dadurch gekennzeichnet, dass** die Anzeigeeinheit (20.6) die ermittelte Winkeldifferenz (ω) vom Anzugswinkel (α_{A}) der unter Serienbedingungen angezogen Schraubenverbindung (10) mit dem Sollanzugswinkel (α_{SOLL}) ausgibt.

8. Verwendung der Vorrichtung (1) nach Anspruch 6 oder 7, **dadurch gekennzeichnet, dass** die Vorrichtung (1) eine Signaleinheit (20.7) aufweist, welche Signaleinheit (20.7) ein für die gemessene Lösewinkeldifferenz (ω_{L}) erzeugtes Lösestoppsignal (S₁) ausgibt; und dass die Signaleinheit (20.7) ein für einen gemessenen Sollanzugswinkel (α_{SOLL}) erzeugtes Anzugstoppsignal (S₂) ausgibt.

9. Computerprogrammprodukt (100) zur Durchführung des Verfahrens nach einem der Ansprüche 1 bis 5, welches Computerprogrammprodukt (100) in einen Datenverarbeitungsprozessor (40.2) einer Auswerteeinheit (40) der Vorrichtung (1) nach einem der Ansprüche 6 bis 8 ladbar ist, **dadurch gekennzeichnet, dass** das Computerprogrammprodukt (100) nach der Ausführung von Schritt f) in einem Schritt ff) den Anzugswinkel (α_{A}), mit welchem Anzugswinkel (α_{A}) die Schraubverbindung (10) unter Serienbedingungen angezogen worden ist, als (α_{A} = α_{SOLL} - ωP + ωL) ermittelt.

10. Computerprogrammprodukt (100) nach Anspruch 9, **dadurch gekennzeichnet, dass** das Computerprogrammprodukt (100) nach der Ausführung von Schritt f) in einem Schritt fff) eine Winkeldifferenz (ω), mit welcher Winkeldifferenz (ω) der Anzugswinkel (α_{A}) der unter Serienbedingungen angezogen Schraubenverbindung (10) vom Sollanzugswinkel (α_{SOLL}) abweicht, als (ω = - ω_{P} + ω_{L}) ermittelt.

11. Computerprogrammprodukt (100) nach Anspruch 9 oder 10, **dadurch gekennzeichnet, dass** das Computerprogrammprodukt (100) vor einer Ausführung vom Schritt a) in einem Schritt aaa) die unter Serienbedingungen angezogene Schraubverbindung (10) identifiziert; und dass das Computerprogrammprodukt (100) der identifizierten Schraubverbindung (10) ein bekanntes Sollanzugsmoment (M_{SOLL}) und ein bekannter Sollanzugswinkel (α_{SOLL}) zuordnet.

12. Computerprogrammprodukt (100) nach Anspruch 11, **dadurch gekennzeichnet, dass** das Computerprogrammprodukt (100) vor einer Ausführung vom Schritt a) und nach der Ausführung von Schritt aaa) in einem Schritt aa) für die identifizierte Schraubverbindung (10) eine vordefinierte Lösewinkeldifferenz (ω_{L}) ermittelt, welche Lösewinkeldifferenz (ω_{L}) gleich dem negativen Sollanzugswinkel (α_{SOLL}) plus einem vordefinierten Lösewinkelzuschlag (α_{Z}) ist.

13. Computerprogrammprodukt (100) nach einem der Ansprüche 9 bis 12, **dadurch gekennzeichnet, dass** das Computerprogrammprodukt (100) nach der Ausführung vom Schritt b) in einem Schritt bb) für die gemessene Lösewinkeldifferenz (ω_{L}) ein Lösestoppsignal (S₁) erzeugt; und dass das Computerprogrammprodukt (100) nach der Ausführung vom Schritt e) in einem Schritt ee) für den gemessenen Sollanzugswinkel (α_{SOLL}) ein Anzugstoppsignal (S₂) erzeugt.

## Claims

1. A method for examining the process capability of a screwed connection (10), wherein said screwed connection (10) has been tightened with a tightening angle (α_{A}) under serial production conditions; **characterized by** the steps of:
aaa) identifying, before executing step a), the screwed connection (10) tightened under serial production conditions; and assigning, to the identified screwed connection (10), a known target tightening torque (M_{SOLL}) and a known target tightening angle (α_{SOLL});
aa) determining, before executing step a) and after executing step aaa), a predefined loosening angle difference (ω_{L}) for the identified screwed connection (10), said loosening angle difference (ω_{L}) being equal to the negative target tightening angle (α_{SOLL}) value plus a predefined loosening angle allowance (α_{Z}) ;
a) loosening the screwed connection (10) until the predefined loosening angle difference (ω_{L}) is obtained;
b) measuring the obtained loosening angle difference (ω_{L}) ; measuring a loosening angle (α_{H}) obtained in step a);
c) tightening the screwed connection (10) with a predefined threshold torque (M_{S}) ;
d) measuring a threshold angle (α_{S}) corresponding to the threshold torque (M_{S}) obtained;
e) further tightening the screwed connection (10) until the known target tightening angle (α_{SOLL}) is obtained; and
f) measuring the test angle difference (ω_{P}) in the tightened state upon obtaining the target tightening angle (α_{SOLL}), said test angle difference (ω_{P}) being an angle difference between the holding angle (α_{H}) and the target tightening angle (α_{SOLL}).

2. The method according to claim 1, **characterized in that** in a step ff), after executing step f), a tightening angle (α_{A}) to which the screwed connection (10) has been tightened under serial production conditions is determined according to (α_{A} = α_{SOLL} - ω_{P} + ω_{L}) ; and **in that** the determined tightening angle (α_{A}) is output.

3. The method according to any of claims 1 or 2, **characterized in that** in a step fff), after executing step f), an angle difference (ω) by which the tightening angle (α_{A}) of the screwed connection (10) tightened under serial production conditions deviates from the target tightening angle (α_{SOLL}) is determined according to (ω = - ω_{P} + ω_{L}) ; and **in that** the determined angle difference (ω) is output.

4. The method according to any of claims 1 to 3, **characterized in that** in a step bb), after executing step b), a loosening stop signal (S₁) is generated for the loosening angle difference (ω_{L}) measured; the generated loosening stop signal (S₁) is output; and **in that** for an output loosening stop signal (S₁) loosening of the screwed connection (10) is stopped.

5. The method according to any of claims 1 to 4, **characterized in that** in a step ee), after executing step e), a tightening stop signal (S₂) is generated for the target tightening angle (α_{SOLL}) measured; the generated tightening stop signal (S₂) is output; and **in that** for an output tightening stop signal (S₂) further tightening of the screwed connection (10) is stopped.

6. A use of a device (1) for carrying out the method according to claim 2, wherein said device (1) comprises a screwing tool (20), said screwing tool (20) being adapted to loosen the screwed connection (10) that has been tightened under serial production conditions; said screwing tool (20) comprising an angle transmitter (20.5), said angle transmitter (20.5) being adapted to measure the loosening angle difference (ω_{L}) ; and said screwing tool (20) comprising a torquemeter (20.4), said torquemeter (20.4) being adapted to measure the threshold torque (MS); **characterized in that** the device (1) comprises a display unit (20.6), wherein said display unit (20.6) displays the determined tightening angle (α_{A}) of the screwed connection (10) tightened under serial production conditions.

7. The use of the device (1) according to claim 6, **characterized in that** the display unit (20.6) displays the determined angle difference (ω) from the tightening angle (α_{A}) of the screwed connection (10) tightened under serial production conditions with the target tightening angle (α_{SOLL}).

8. The use of the device (1) according to claim 6 or 7, **characterized in that** the device (1) comprises a signal unit (20.7) wherein said signal unit (20.7) outputs a loosening stop signal (S₁) that is generated for the loosening angle difference (ω_{L}) measured; and **in that** the signal unit (20.7) outputs a tightening stop signal (S₂) that is generated for a target tightening angle (α_{SOLL}) measured.

9. A computer program product (100) for carrying out the method according to any of claims 1 to 5, wherein said computer program product (100) can be loaded in a data processor (40.2) of an evaluation unit (40) of the device (1) according to any of claims 6 to 8, **characterized in that** in a step ff), after executing step f), the computer program product (100) determines the tightening angle (α_{A}) to which the screwed connection (10) has been tightened under serial production conditions according to (α_{A} = α_{SOLL} - ωP + ωL).

10. The computer program product (100) according to claim 9, **characterized in that** in a step fff), after executing step f), the computer program product (100) determines an angle difference (ω) by which the tightening angle (α_{A}) of the screwed connection (10) tightened under serial production conditions deviates from the target tightening angle (α_{SOLL}) according to (ω = - ω_{P} + ω_{L}).

11. The computer program product (100) according to claim 9 or 10, **characterized in that** in a step aaa), before executing step a), the computer program product (100) identifies the screwed connection (10) tightened under serial production conditions; and **in that** the computer program product (100) assigns a known target tightening torque (M_{SOLL}) and a known target tightening angle (α_{SOLL}) to the identified screwed connection (10).

12. The computer program product (100) according to claim 11, **characterized in that** in a step aa), before executing step a) and after executing step aaa), for the identified screwed connection (10) the computer program product (100) determines a predefined loosening angle difference (ω_{L}) said loosening angle difference (ω_{L}) being equal to the negative target tightening angle (α_{SOLL}) value plus a predefined loosening angle allowance (α_{Z}).

13. The computer program product (100) according to any of claims 9 to 12, **characterized in that** in a step bb), after executing step b), the computer program product (100) generates a loosening stop signal (S₁) for the loosening angle difference (ω_{L}) measured; and **in that** in a step ee), after executing step e), the computer program product (100) generates a tightening stop signal (S₂) for the target tightening angle (α_{SOLL}) measured.

## Revendications

1. Procédé pour examiner la capabilité processus d'une connexion vissée (10), dans lequel ladite connexion vissée (10) a été serrée dans des conditions de production en série avec un angle de serrage (α_{A}) ; **caractérisé par** les étapes dans lesquelles :
aaa) avant d'exécuter l'étape a), on identifie la connexion vissée (10) serrée dans des conditions de production en série; et on attribue, à la connexion vissée (10) identifiée, un couple de serrage cible (M_{SOLL}) connu et un angle de serrage cible (α_{SOLL}) connu;
aa) avant d'exécuter l'étape a) et après avoir exécuté l'étape aaa), on détermine une différence d'angle de desserrage (ω_{L}) prédéfinie pour la connexion vissée (10) identifiée, ladite différence d'angle de desserrage (ω_{L}) étant égale à la valeur négative de l'angle de serrage cible (α_{SOLL}) plus une tolérance d'angle de desserrage (α_{Z}) prédéfinie;
a) on desserre la connexion vissée (10) jusqu'à ce que la différence d'angle de desserrage (ω_{L}) prédéfinie soit obtenue;
b) on mesure la différence d'angle de desserrage (ω_{L}) obtenue; puis on mesure un angle de desserrage (α_{H}) obtenu à l'étape a);
c) on serre la connexion vissée (10) avec un seuil de couple (M_{S}) prédéfini;
d) on mesure un seuil d'angle (α_{S}) correspondant au seuil de couple (M_{S}) obtenu;
e) on resserre davantage la connexion vissée (10) jusqu'à ce que l'angle de serrage cible (α_{SOLL}) connu soit obtenu; et
f) on mesure la différence d'angle d'essai (ω_{P}) dans l'état resserré lors de l'obtention de l'angle de serrage cible (α_{SOLL}), ladite différence d'angle d'essai (ω_{P}) étant une différence d'angle entre l'angle de maintien (α_{H}) et l'angle de serrage cible (α_{SOLL}).

2. Procédé selon la revendication 1, **caractérisé en ce que** dans une étape ff), après avoir exécuté l'étape f), un angle de serrage (α_{A}) auquel la connexion vissée (10) a été serrée dans des conditions de production en série est déterminé selon (α_{A} = α_{SOLL} - ω_{P} + ω_{L}) ; et **en ce que** l'angle de serrage (α_{A}) déterminé est délivré.

3. Procédé selon l'une quelconque des revendications 1 ou 2, **caractérisé en ce que** dans une étape fff), après avoir exécuté l'étape f), une différence d'angle (ω) par laquelle l'angle de serrage (α_{A}) de la connexion vissée (10) serrée dans des conditions de production en série s'écarte de l'angle de serrage cible (α_{SOLL}) est déterminé selon (ω = - ω_{P} + ω_{L}) ; et **en ce que** la différence d'angle (ω) déterminée est délivrée.

4. Procédé selon l'une quelconque des revendications 1 à 3, **caractérisé en ce que** dans une étape bb), après l'exécution de l'étape b), un signal d'arrêt de desserrage (S₁) est généré pour la différence d'angle de desserrage (ω_{L}) mesurée; le signal d'arrêt de desserrage (S₁) généré est délivré; et **en ce que** pour un signal d'arrêt de desserrage (S₁) délivré le desserrage de la connexion vissée (10) est arrêté.

5. Procédé selon l'une quelconque des revendications 1 à 4, **caractérisé en ce que** dans une étape ee), après exécution de l'étape e), un signal d'arrêt de serrage (S₂) est généré pour l'angle de serrage cible (α_{SOLL}) mesuré; le signal d'arrêt de serrage (S₂) généré est délivré; et **en ce que** pour un signal d'arrêt de serrage (S₂) délivré le serrage de la connexion vissée (10) est arrêté.

6. Utilisation d'un dispositif (1) pour mettre en œuvre le procédé selon la revendication 2, dans lequel ledit dispositif (1) comprend un outil de vissage (20), ledit outil de vissage (20) étant adapté pour desserrer la connexion vissée (10) resserré dans des conditions de production en série; ledit outil de vissage (20) comprenant un transmetteur d'angle (20.5), ledit transmetteur d'angle (20.5) étant adapté pour mesurer la différence d'angle de desserrage (ω_{L}) ; et ledit outil de vissage (20) comprenant un couplemètre (20.4), ledit couplemètre (20.4) étant adapté pour mesurer le seuil de couple (M_{S}) ; **caractérisé en ce que** le dispositif (1) comprend une unité d'affichage (20.6), dans laquelle ladite unité d'affichage (20.6) affiche l'angle de serrage déterminé (α_{A}) de la connexion vissée (10) serrée dans des conditions de production en série.

7. Utilisation du dispositif (1) selon la revendication 6, **caractérisée en ce que** l'unité d'affichage (20.6) affiche la différence d'angle (ω) déterminée de l'angle de serrage (α_{A}) de la connexion vissée (10) serrée dans des conditions de production en série avec l'angle de serrage cible (α_{SOLL}).

8. Utilisation du dispositif (1) selon la revendication 6 ou 7, **caractérisée en ce que** le dispositif (1) comprend une unité de signalisation (20.7) dans laquelle ladite unité de signalisation (20.7) délivre un signal d'arrêt de desserrage (S₁) généré pour la différence d'angle de desserrage (ω_{L}) mesurée; et **en ce que** l'unité de signalisation (20.7) délivre un signal d'arrêt de serrage (S₂) généré pour un angle de serrage cible (α_{SOLL}) mesuré.

9. Produit de programme informatique (100) pour mettre en œuvre le procédé selon l'une quelconque des revendications 1 à 5, dans lequel ledit produit de programme informatique (100) est chargeable dans un processeur de données (40.2) d'une unité d'évaluation (40) du dispositif (1) selon l'une quelconque des revendications 6 à 8, **caractérisé en ce que** dans une étape ff), après avoir exécuté l'étape f), le produit de programme informatique (100) détermine l'angle de serrage (α_{A}) auquel la connexion vissée (10) a été serrée dans des conditions de production en série selon (α_{A} = α_{SOLL} - ωP + ωL).

10. Produit de programme informatique (100) selon la revendication 9, **caractérisé en ce que** dans une étape fff), après l'exécution de l'étape f), le produit de programme informatique (100) détermine une différence d'angle (ω) par laquelle l'angle de serrage (α_{A}) de la connexion vissée (10) serrée dans des conditions de production en série s'écarte de l'angle de serrage cible (α_{SOLL}) selon (ω = - ω_{P} + ω_{L}).

11. Produit de programme informatique (100) selon la revendication 9 ou 10, **caractérisé en ce que** dans une étape aaa), avant d'exécuter l'étape a), le produit de programme informatique (100) identifie la connexion vissée (10) serrée dans des conditions de production en série ; et **en ce que** le produit de programme informatique (100) attribue un couple de serrage cible (M_{SOLL}) connu et un angle de serrage cible (α_{SOLL}) connu à la connexion vissée (10) identifiée.

12. Produit de programme informatique (100) selon la revendication 11, **caractérisé en ce que** dans une étape aa), avant d'exécuter l'étape a) et après avoir exécuté l'étape aaa), pour la connexion vissée identifiée (10) le produit de programme informatique (100) détermine une différence d'angle de desserrage (ω_{L}) prédéfinie, ladite différence d'angle de desserrage (ω_{L}) étant égale à la valeur négative d'angle de serrage cible (α_{SOLL}) plus une tolérance d'angle de desserrage (α_{Z}) prédéfinie.

13. Produit de programme informatique (100) selon l'une quelconque des revendications 9 à 12, **caractérisé en ce que** dans une étape bb), après avoir exécuté l'étape b), le produit de programme informatique (100) génère un signal d'arrêt de desserrage (S₁) pour la différence de l'angle de desserrage (ω_{L}) mesurée; et **en ce que** dans une étape ee), après avoir exécuté l'étape e), le produit de programme informatique (100) génère un signal d'arrêt de serrage (S₂) pour l'angle de serrage cible (α_{SOLL}) mesuré.
